# DEMANDE DE BREVET EUROPEEN

(11) **EP 2 055 216 A1**
(43) Date de publication de la demande: **06.05.2009**
(21) Numéro de dépôt: 08167436.8
(22) Date de dépôt: 23.10.2008
(51) Int. Cl.: A47J 37/06

(54) **Appareil de cuisson par rayonnement**

(30) Priorité: 29.10.2007 FR 0758642
(71) Demandeur: SEB S.A., 69130 Ecully (FR)
(72) Inventeur: Veniat, Jacky, 74150 Rumilly (FR); Moine, M.Olivier, 73100 Aix les Bains (FR)
(74) Mandataire: Lemoine, Jean-Sébastien

(57) **Abrégé**

La présente invention concerne un appareil de cuisson comprenant une surface de cuisson (2), un dispositif de chauffe (3) disposé au-dessus de la surface de cuisson (2) et au moins une ouverture verticale (4) s'étendant de la surface de cuisson (2) au dispositif de chauffe (3) qui comprend au moins un résistance électrique (7) et un système réfléchissant (8).

Selon l'invention, le système réfléchissant (8) enveloppe la résistance (7), comprend au moins une ouverture (12,14) et est conformé et agencé par rapport à la surface de cuisson (2) et à la résistance (7) de sorte que le rayonnement thermique provenant du dispositif de chauffe (3) forme un rideau de chaleur dont la largeur est sensiblement égale à la largeur de la surface de cuisson (2).

## Description

La présente invention concerne un appareil de cuisson par rayonnement.

On connaît un appareil de cuisson du type comprenant une surface de cuisson, un dispositif de chauffe disposé au-dessus de la surface de cuisson et au moins une ouverture verticale s'étendant de la surface de cuisson au dispositif de chauffe, le dispositif de chauffe comprenant au moins un résistance électrique et un système réfléchissant.

Un tel appareil est par exemple décrit dans la demande de brevet FR 2681 231. Cependant, l'inconvénient d'un tel appareil est le fait que le rayonnement thermique émis par le dispositif de chauffe vers la surface de cuisson est divergent, ce qui entraîne un chauffage important autour de la surface de cuisson. Ce chauffage hors de la surface de cuisson est d'une part gênant car il empêche de disposer à volonté de cette zone (par exemple, il est impossible d'y poser des verres), et d'autre part oblige un surdimensionnement de la puissance de chauffe pour chauffer efficacement la surface de cuisson.

La présente invention vise à réaliser un appareil de cuisson ne présentant pas les inconvénients précités.

Selon l'invention, le système réfléchissant de l'appareil de cuisson du type précité enveloppe la résistance électrique, comprend au moins une ouverture et est conformé et agencé par rapport à la surface de cuisson et à la résistance électrique de sorte que le rayonnement thermique provenant du dispositif de chauffe forme un rideau de chaleur dont la largeur est sensiblement égale à la largeur de la surface de cuisson.

D'autres particularités et avantages de la présente invention apparaîtront dans la description de deux modes de réalisation donnés à titre d'exemples non limitatifs et illustrés par les dessins mis en annexe dans lesquels

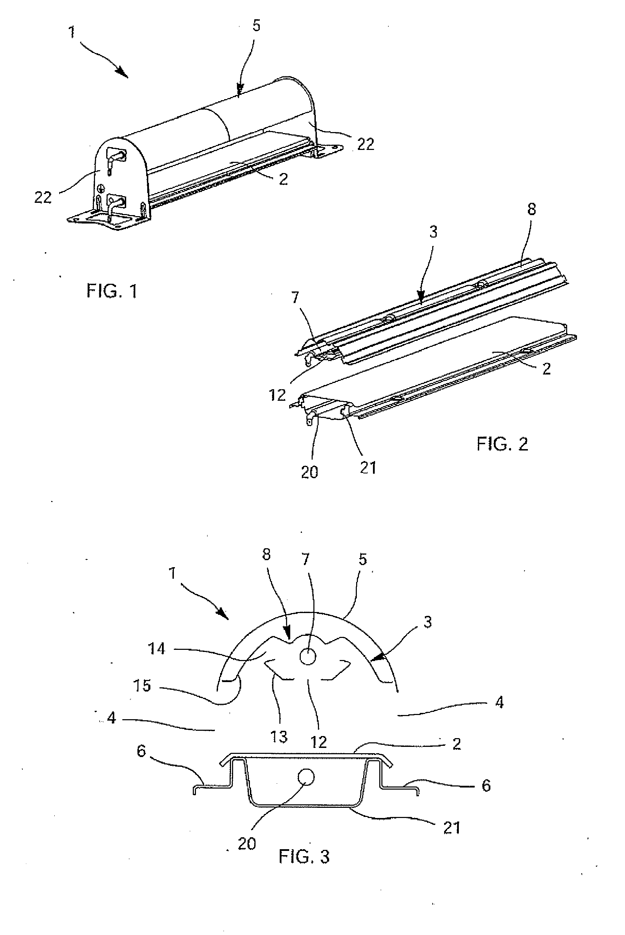

La figure 1 est une vue en perspective d'un appareil de cuisson conforme à un premier mode de réalisation de la présente invention, sans son habillage esthétique,

La figure 2 est une vue de l'appareil de la figure 1, sans les deux panneaux latéraux,

La figure 3 est une vue en coupe longitudinale de l'appareil de la figure 1,

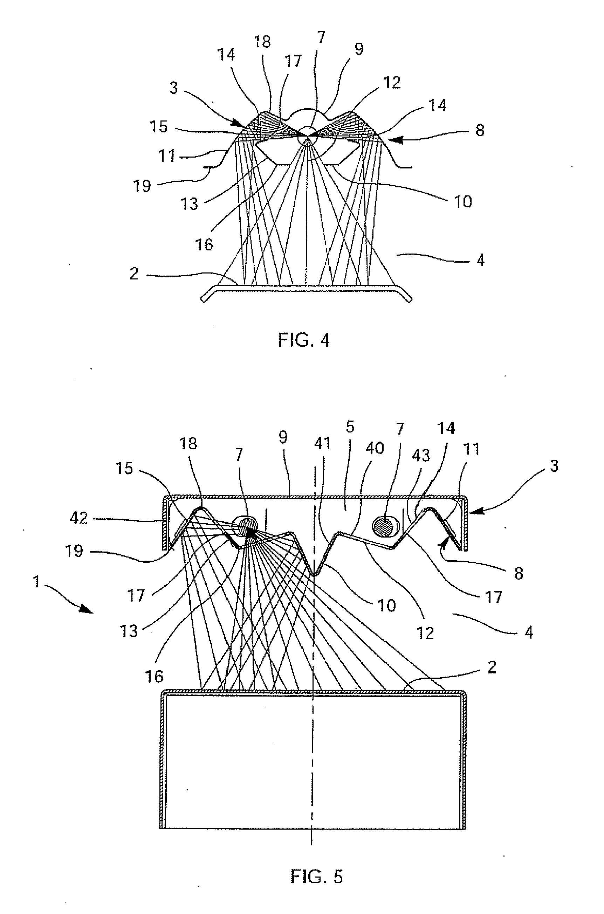

La figure 4 est une vue de l'appareil de la figure 1, vue similaire à la figure 3, limitée au dispositif de chauffe et à la surface de cuisson, illustrant le principe du rideau de chaleur produit par l'appareil de cuisson de la présente invention, et

La figure 5 est une vue d'un appareil conforme à un second mode de réalisation de la présente invention, similaire à la figure 4.

L'invention concerne un appareil de cuisson 1 comprenant une surface de cuisson 2 adaptée à recevoir un aliment à cuire, un dispositif de chauffe 3 disposé au-dessus de la surface de cuisson 2, et au moins une ouverture verticale 4 s'étendant de la surface de cuisson 2 au dispositif de chauffe 3.

Dans les présents modes de réalisation, l'appareil de cuisson 1 comprend deux ouvertures verticales 4, une de chaque côté de la surface de cuisson 2 et du dispositif de chauffe 3. De ce fait, dans les présents exemples, le dispositif de chauffe 3 est disposée dans une arche 5 surplombant la surface de cuisson 2. L'arche 5 permet d'empêcher tout contact avec le dispositif de chauffe 3.

Par ailleurs, dans le premier mode de réalisation, l'appareil de cuisson 1 comprend également une surface de réception 6 qui prolonge latéralement la surface de cuisson 2 de chaque côté de cette dernière.

Le dispositif de chauffe 3, dans les deux modes de réalisation, comprend au moins un résistance électrique 7 (une seule pour le premier mode de réalisation, et deux pour le second) et un système réfléchissant 8 qui enveloppe la résistance électrique 7. Le système réfléchissant 8 comprend au moins une ouverture 12,14 et est conformé et agencé par rapport à la résistance électrique 7 et à la surface de cuisson 2 de sorte que le rayonnement thermique provenant du dispositif de chauffe 3 forme un rideau de chaleur dont la largeur est sensiblement égale à celle de la surface de cuisson 2.

De façon plus précise, le système réfléchissant 8 comprend, au-dessus de chaque résistance électrique 7, une section supérieure 9, au-dessous, une section inférieure 10 et de chaque côté de celle-ci, une section latérale 11.

La section supérieure 9 est pleine et s'étend principalement de façon horizontale. Dans le premier mode de réalisation, elle a la forme d'un arc de cercle qui est situé au-dessus de la résistance électrique 7 et qui est prolongé, à chacune ses extrémités, par une surface plane radiale s'évasant vers le haut. Au contraire, dans le second mode de réalisation, elle est parfaitement plane et forme ainsi une surface de réception pour réchauffer des aliments, et elle est prolongée par deux ailes latérales 42.

La section inférieure 10 s'étend principalement de façon horizontale. Dans les présents modes de réalisation, elle comprend des fenêtres 12 permettant à une portion du rayonnement émis directement par chaque résistance électrique 7, vers le bas, de les traverser.

Dans le premier mode de réalisation, la section inférieure 10 s'étend selon un plan horizontal. En outre, elle comprend, juste au-dessous de la résistance électrique 7, une série de fenêtres 12 disposées longitudinalement les unes à la suite des autres. La largeur des fenêtres 12 est elle que l'ensemble du rayonnement thermique émis directement par la résistance électrique 7 les traversant n'atteint que la surface de cuisson 2. En outre, ces fenêtres 12 sont séparées les unes des autres par des portions centrales de la section inférieure 10 afin de limiter le transfert thermique qui serait si non trop important dans la zone centrale de la surface de cuisson 2.

Dans le second mode de réalisation, la section inférieure 10 est de forme plus complexe : elle est symétrique et comprend deux parties latérales 40 et une partie centrale 41. La partie centrale 41 comprend deux pans qui s'étendent selon une forte composante verticale de façon à se rejoindre à leur extrémité inférieure pour former un V. Les deux parties latérales 40 s'étendent de façon essentiellement horizontale et, ici, rejoignent l'extrémité supérieure correspondante de la partie centrale 41, au niveau de leur extrémité supérieure. Dans le second mode de réalisation, les fenêtres 12 sont réalisées dans chaque partie latérale 40. Chaque partie latérale 40 ne comporte qu'une série de fenêtres 12 qui sont disposées longitudinalement les unes à la suite des autres. Dans le second mode de réalisation, chaque série de fenêtres 12 est disposée juste, et presque intégralement, au-dessous d'une résistance électrique 7. La structure particulière de la section inférieure 10 est telle que, une partie du rayonnement thermique émis directement par la résistance électrique 7 traversant les fenêtres 12 n'atteint que la surface de cuisson 2, et ceci de façon directe, la partie complémentaire les traversant est ensuite réfléchie par le pan correspondant de la partie centrale 41 et n'atteint, elle aussi, que la surface de cuisson 2.

Chaque section latérale 11 comporte une partie latérale inférieure 13, une ouverture latérale 14 et une partie latérale externe 15.

Chaque partie latérale inférieure 13 a une orientation verticale de façon à former un écran contre le rayonnement thermique qui est émis, directement par la résistance électrique 7, essentiellement vers le bas et sur le côté. Sans cette partie latérale inférieure 13, le rayonnement thermique direct chaufferait les zones adjacentes à la surface de cuisson 2 (les surfaces de réception 6 dans le premier mode de réalisation).

De façon plus précise, dans les présents modes de réalisation, chaque partie latérale inférieure 13 s'étend selon un plan qui est orienté selon un angle d'environ 45° avec l'horizontale, l'extrémité inférieure 16 de la partie latérale inférieure 13 étant plus proche, transversalement, de la résistance électrique 7 que ne l'est son extrémité supérieure 17. En outre, ici, l'extrémité supérieure 17 est sensiblement au même niveau, verticalement, que la résistance électrique 7. Dans les présents exemples, la section inférieure 10 est prolongée, de chaque côté, par une partie latérale inférieure 13. Dans le premier mode de réalisation cet ensemble forme un réflecteur inférieur unique (un réflecteur en U avec les deux branches latérales évasées vers le haut).

Chaque ouverture latérale 14 a une orientation verticale. L'extrémité supérieure 17 de la partie latérale inférieure 13 forme la limite inférieure de l'ouverture latérale 14. Chaque ouverture latérale 14 est la seule ouverture (avec les fenêtres centrales 12 dans les présents modes de réalisation) par laquelle le rayonnement thermique peut sortir du système réfléchissant 8. Le rayonnement émis directement par la résistance électrique 7 traversant une ouverture latérale 14 est celui dont l'orientation est sensiblement horizontale. Cette ouverture latérale 14 permet également de limiter la montée en température à l'intérieur du système réfléchissant 8.

Dans le premier mode de réalisation, chaque ouverture latérale 14 s'étend sur toute la longueur du système réfléchissant 8 de façon à délimiter le réflecteur inférieur. Dans le second mode de réalisation, chaque ouverture latérale 14 correspond à une fenêtre 12 qui est réalisée dans la section inférieure 10 des deux modes de réalisation.

Chaque partie latérale externe 15 a une orientation verticale, est disposée latéralement au-delà de la partie latérale inférieure 13 correspondante, et s'étend, verticalement vers le bas, au-delà de l'ouverture latérale 14 correspondante de façon à réfléchir uniquement vers la surface de cuisson 2 l'ensemble du rayonnement qui a été émis directement par la résistance électrique 7 et qui a traversé l'ouverture latérale 14. Sans cette partie latérale externe 15, le rayonnement traversant l'ouverture latérale 14 chaufferait les zones adjacentes à la surface de cuisson 2 (les surfaces de réception 6 dans le premier mode de réalisation).

De façon plus précise, dans les présents modes de réalisation, chaque partie latérale externe 15 s'étend, de façon générale, selon un plan orienté selon un angle d'environ 45° avec l'horizontale, l'extrémité supérieure 18 de la partie externe 15 étant plus proche, transversalement, de la résistance électrique 7 que ne l'est son extrémité inférieure 19.

Dans le premier mode de réalisation, le profil de chaque partie latérale externe 15 est tel que, de son extrémité supérieure 19 à son extrémité inférieure 18, la composante verticale de son inclinaison est de plus en plus importante. Ceci permet de compenser le fait que, en sortie de l'ouverture latérale 14, le rayonnement direct a une direction radiale. En outre, l'extrémité inférieure 19 de chaque partie latérale externe 15 est sensiblement au même niveau, verticalement, que la section inférieure 10. De plus, la section supérieure 9 est prolongée, de chaque côté, par une partie latérale externe 15 et forme avec celles-ci un réflecteur supérieur unique (ici, un réflecteur en U inversé avec les deux branches latérales évasées vers le bas).

Dans le second mode de réalisation, chaque partie latérale externe 15 est plane. En outre, l'extrémité inférieure 19 de chaque partie latérale externe 15 est sensiblement au même niveau, verticalement, que l'extrémité inférieure 16 de la partie latérale inférieure 13. De plus, chaque partie latérale 15 prolonge le panneau 43 qui forme la partie latérale inférieure 13 et dans lequel sont réalisées les différentes ouvertures latérales 14. Ainsi, la section inférieure 10 et les sections latérales 11 forment un unique réflecteur.

Par ailleurs, dans le premier mode de réalisation, l'appareil de cuisson 1 comprend, sous la surface de cuisson 2, une résistance inférieure de chauffe 20 (qui, ici, est disposée dans un socle 21 dont la surface de cuisson 2 forme la surface supérieure). Enfin, l'appareil de cuisson 1 comprend deux panneaux 22 reliant l'arche 5 au socle 21.

En utilisation, l'appareil est mis en marche, ce qui entraîne l'émission de rayonnement thermique provenant de la résistance électrique 7 disposée dans l'arche 5, ainsi que celui provenant de la résistance inférieure 20. Concernant chaque résistance électrique 7 qui est disposée dans l'arche 5, une partie de son rayonnement émis par sa face inférieure traverse les fenêtres 12 et est éventuellement réfléchie par la partie centrale 41, une partie de celui émis par ses faces latérales traverse les ouvertures latérales 14 pour être réfléchie vers le bas par les parties latérales externes 15 tout en étant orientée vers le centre de la surface de cuisson 2, le reste du rayonnement étant réfléchi par le système réfléchissant 8 jusqu'à ce qu'il sorte par une de ces ouvertures 12,14 réalisées dans le système 8.

De ce fait, un utilisateur, notamment un enfant, est protégé même en l'absence de porte d'accès à la surface de cuisson, car le rideau de chaleur permet de déposer en toute sécurité une pâtisserie à cuire à l'aide d'une simple fourchette, pince ou spatule, la carrosserie de l'appareil matérialisant la zone chaude.

L'appareil du second mode de réalisation est particulièrement adapté pour former un appareil à raclette, les coupelles étant disposées sur la surface de cuisson 2, et l'arche 5 servant de support pour recevoir des aliments à maintenir au chaud.

La présente invention n'est pas limitée aux modes de réalisation. Il serait ainsi possible qu'il y ait plusieurs résistances électriques sous la surface de cuisson. Un tel appareil pourrait être conçu pour cuire ou réchauffer divers types d'aliments.

## Revendications

1. Appareil de cuisson (1) comprenant une surface de cuisson (2) adaptée à recevoir un aliment à cuire, un dispositif de chauffe (3) disposé au-dessus de la surface de cuisson (2) et au moins une ouverture verticale (4) s'étendant de la surface de cuisson (2) au dispositif de chauffe (3), le dispositif de chauffe (3) comprenant au moins un résistance électrique (7) et un système réfléchissant (8), **caractérisé en ce que** le système réfléchissant (8) enveloppe la résistance électrique (7), comprend au moins une ouverture (12,14) et est conformé et agencé par rapport à la surface de cuisson (2) et à la résistance électrique (7) de sorte que le rayonnement thermique provenant du dispositif de chauffe (3) forme un rideau de chaleur dont la largeur est sensiblement égale à la largeur de la surface de cuisson (2).

2. Appareil de cuisson (1) selon la revendication 1, **caractérisé en ce que** le système réfléchissant (8) comprend une section supérieure (9) s'étendant au-dessus de la résistance (7), une section inférieure (10) s'étendant au-dessous, et, de chaque côté de chaque résistance (7), une section latérale (11) qui comporte une partie latérale inférieure (13) orientée de façon à former un écran contre le rayonnement thermique émis directement par la résistance électrique (7) correspondante vers le bas et latéralement hors de la surface de cuisson (2), une ouverture latérale (14) dont l'extrémité inférieure est délimitée par l'extrémité supérieure (17), et une partie latérale externe (15) disposée latéralement au-delà de la partie latérale inférieure (13) s'étendant vers le bas au-delà de l'ouverture latérale (14) et orientée de façon à réfléchir vers la surface de cuisson (2) l'ensemble du rayonnement émis directement latéralement par la résistance électrique (7) correspondante et ayant traversé l'ouverture latérale (14).

3. Appareil de cuisson (1) selon la revendication 2, **caractérisé en ce que** la section inférieure (10) comprend au moins une série de fenêtres (12) disposées longitudinalement les unes à la suite des autres, directement sous chaque résistance électrique (7) correspondante.

4. Appareil de cuisson (1) selon la revendication 3, **caractérisé en ce que** la largeur des fenêtres (12) est telle que l'ensemble du rayonnement thermique émis directement par la résistance électrique les traversant n'atteint que la surface de cuisson (2).

5. Appareil de cuisson (1) selon la revendication 4, **caractérisé en ce que** la section inférieure (10) comprend une partie centrale (41) en forme de V, et deux parties latérales (40) qui s'étendent de façon essentiellement horizontale, prolongent, de chaque côté, la partie centrale (41) et dans lesquelles sont réalisées les fenêtres (12), la section inférieure (10) étant agencée de façon telle que, une partie du rayonnement thermique émis directement par chaque résistance électrique (7) traversant les fenêtres (12) atteint directement la surface de cuisson (2), la partie complémentaire les traversant l'atteignant après avoir été réfléchie par la partie centrale (41).

6. Appareil de cuisson (1) selon l'une des revendications 1 à 5, **caractérisé en ce que** l'extrémité supérieure (17) de chaque partie latérale inférieure (13) est sensiblement au même niveau que chaque résistance électrique (7).

7. Appareil de cuisson (1) selon l'une des revendications 1 à 6, **caractérisé en ce que** la section inférieure (10) est prolongée de chaque côté par la partie latérale inférieure (13) correspondante.

8. Appareil de cuisson (1) selon l'une des revendications 1 à 7, **caractérisé en ce que** la section supérieure (9) est prolongée de chaque côté par la partie latérale externe (15) correspondante, et forme avec celles-ci un réflecteur supérieur unique.

9. Appareil de cuisson (1) selon la revendication 8, **caractérisé en ce que** le réflecteur supérieur a une forme en U inversé avec les deux branches latérales évasées vers le bas.

10. Appareil de cuisson (1) selon la revendication 5, **caractérisé en ce que** l'ensemble formé par la section inférieure (10) et par les parties latérales inférieures (13) forme un réflecteur unique ayant une forme en U avec les deux branches latérales évasées vers le haut.

11. Appareil de cuisson (1) selon la revendication 7, **caractérisé en ce que** chaque partie latérale inférieure (13) fait partie d'un panneau dans lequel sont réalisées les ouvertures latérales (14) et qui est prolongé par une partie latérale externe (15) de sorte que la section inférieure (10) et les sections latérales (11) forment un réflecteur unique.

12. Appareil de cuisson (1) selon l'une des revendications 1 à 11, **caractérisé en ce que** chaque partie latérale externe (15) a un profil tel que, de son extrémité supérieure (18) à son extrémité inférieure (19), la composante verticale de son inclinaison est de plus en plus importante.

13. Appareil de cuisson (1) selon l'une des revendications 1 à 12, **caractérisé en ce qu'**il comprend une ouverture verticale (4) qui s'étend de la surface de cuisson (2) au dispositif de chauffe (3), de chaque côté de ces derniers, le dispositif de chauffe (3) étant disposé dans une arche (5).

14. Appareil de cuisson (1) selon l'une des revendications 1 à 13, **caractérisé en ce qu'**il comprend une surface de réception (6) prolongeant latéralement la surface de cuisson (2) du côté de chaque ouverture verticale (4).

15. Appareil de cuisson (1) selon l'une des revendications 1 à 14, **caractérisé en ce qu'**il comprend, sous la surface de cuisson (2), une résistance inférieure de chauffe.
